# EUROPEAN PATENT APPLICATION

(11) **EP 4 209 421 A1**
(43) Date of publication of application: **12.07.2023**
(21) Application number: 22382006.9
(22) Date of filing: 07.01.2022
(51) Int. Cl.: B64F 1/305

(54) **ANTIHURRICANE CANOPY**

(71) Applicant: TK Airport Solutions, S.A., 33682 Mieres (Asturias) (ES)
(72) Inventor: Murias Bermejo, Antonio, 33212 Gijón; Asturias (ES); Escapa Galguera, Fernando, 33404 Las Vegas Corvera, Asturias (ES); Borja Gonzalo, Alexandra, 33011 Oviedo Asturias (ES)
(74) Representative: Jacobi, Nicolas

(57) **Abstract**

Passenger boarding bridge (1), comprising
a tunnel (11),
a cabin (10) located at a front end of the passenger boarding bridge (1) and adapted to face in a docked situation the fuselage of an aircraft (9) to be docked,
the cabin (10) comprising a flexible canopy (12) which can be transferred between an extended state and a retracted state,
wherein the passenger boarding bridge (1) comprises a wind protection (13),
the wind protection (13) is adapted to reduce risk of damages to the canopy caused by stormy wind conditions.

## Description

The invention refers to a passenger boarding bridge.

Passenger boarding bridges are widely used at airports all over the globe. The passenger boarding bridge enables passengers to get directly from the airport building to the aircraft without the need of using an apron bus.

The passenger boarding bridge according to the prior art and of the present invention has a cabin which is open at a side facing the aircraft. Here a flexible canopy is provided which can be brought into alignment with the docked aircraft, providing a rain protection for the passengers.

Due to the open sided construction of the cabin a stormy wind may blow into the interior of the cabin. This leads to a plumb up of the canopy, causing damages to the canopy.

It is an object of the invention to provide an improved passenger boarding bridge. This object is solved by a passenger boarding bridge according to claim 1; embodiments are subject of the subclaims and the description.

The inventive passenger boarding bridge comprises a tunnel, in particular with two or more telescopable tunnel sections, a cabin located at a front end of the passenger boarding bridge. The cabin is adapted to face in a docked situation the fuselage of an aircraft to be docked. The cabin comprises a flexible canopy. The canopy is adapted to be transferred between an extended state and a retracted state. In the extracted state the canopy is in particular in alignment with the aircraft fuselage.

According to the invention the passenger boarding bridge comprises a wind protection, the wind protection is adapted to reduce risk of damages to the canopy caused by stormy wind conditions.

In an embodiment the wind protection comprises a protective housing. The protective housing is arranged in a manner so as to be located at a distance from a canopy side wall and/or a canopy top wall during normal weather conditions, and so as to be at least temporary in contact with the canopy side wall and/or the canopy top wall during stormy weather condition.

Consequently, in certain situations, when the stormy wind has reached a certain intensity and the canopy is plumped up at a certain extended, a further deformation of the canopy is stopped by the protective housing. In particular, this prevents that fittings and eyelets of the canopy become torn off or that ruptures are created in the textile fabric of the canopy.

In particular the protective housing constitutes a mechanical barrier, adapted to prevent an excessive buckling of the canopy in particular of the side wall and/or of the top wall. This can be achieved by a variety of solutions. For example, the protective housing needs not to be made by airtight or air sealed elements. For reaching the above effect, also a grid structure may be sufficient as long as this structure provides the mechanical barrier for the canopy.

In particular, the protective housing is provided to protect the canopy when the canopy is in the retracted state. Here it is made sure that the protective housing is in a position where it does not interfere with the fuselage of the aircraft. So as a consequence, the protective housing is not necessarily adapted to protect the canopy, when the canopy is in the extended state.

The invention is described in detail with reference to the figures, herein shows:
- fig. 1: schematically a conventional passenger boarding bridge a) in side view along with an aircraft, b) in frontal view;
- fig. 2: schematically an inventive passenger boarding bridge a) in side view along with an aircraft, b) in frontal view.

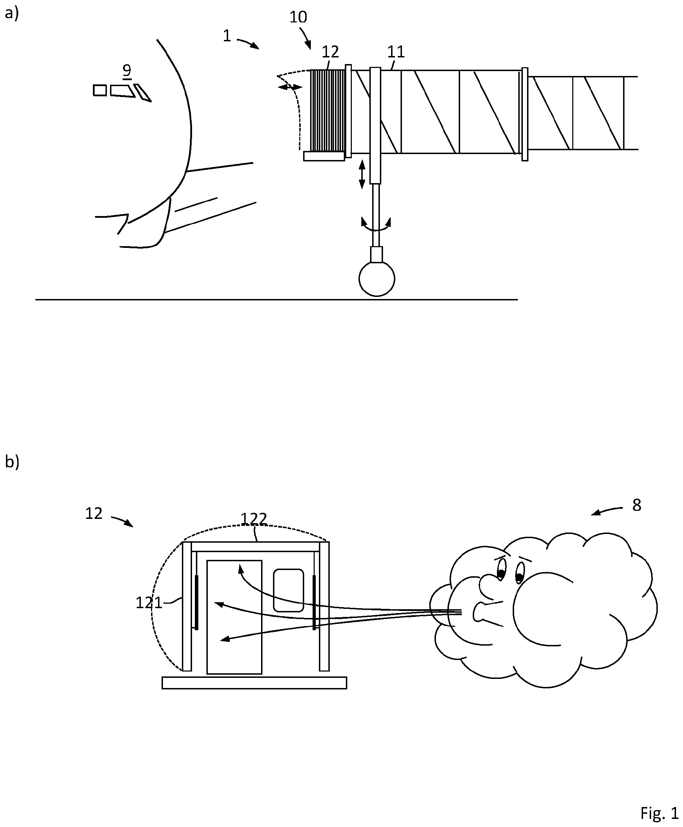

A passenger boarding bridge as shown in figure 1 has a tunnel 11 with two or more telescopable tunnel sections. During docked to an aircraft 9 a cabin 10 of the passenger boarding bridge 1 is facing the aircraft 9.

A canopy 12 is provided at said cabin 10. The canopy 12 can be transferred between a retracted state (shown in figure 1a by solid lines) and an extended state (indicated in figure 1a by dotted lines). When the passenger boarding bridge is not in use, the canopy 11 is in the retracted state.

Even in the retracted state the canopy of the conventional passenger boarding bridge is not protected against damage during heavy storms. As figure 1b shows a storm 8 may blow into the insides space of the cabin 10 and may push the canopy 12 outwards radially from the inside (see dotted line). Here heavy damages may be the result in particular to side areas 121 and top walls 122 of the canopy 12 or to fixations means.

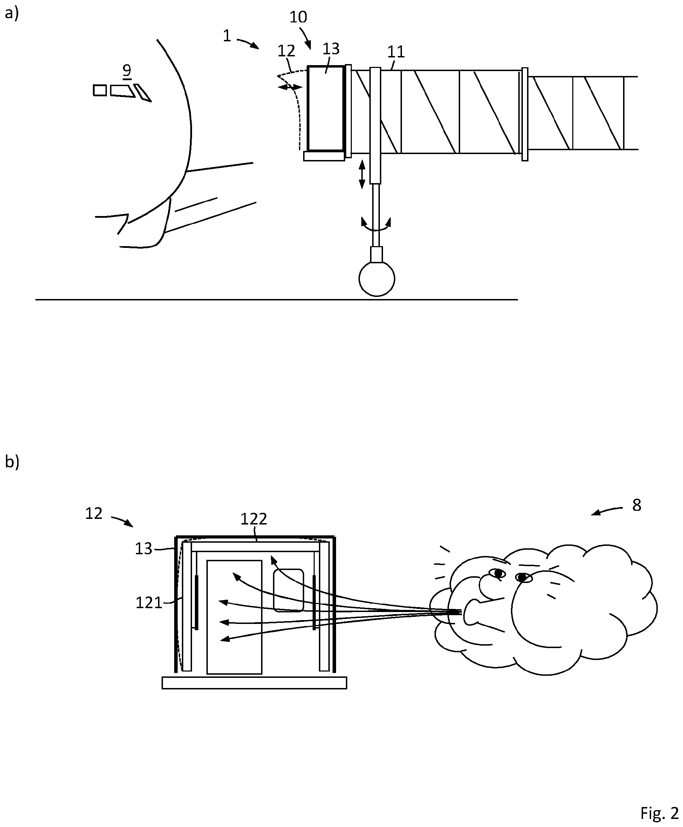

In the inventive passenger boarding bridge shown in figure 2, the canopy is in the retracted state surrounded by a protective housing 13. The protective housing 13 limits an outward movement of the canopy side and top walls 121, 122 during stormy conditions. As a result the canopy is protected against damage caused by the storm, since the storm cannot push the side and top walls 121 122 too far outwards.

The protective effect is achieved that during stormy conditions the side wall and the top wall gets in contact with the protective housing. Thereby the protective housing constitutes a mechanical barrier, that prevents an excessive buckling of a side wall and the top wall.

### List of reference signs

- 1: passenger boarding bridge
- 8: storm
- 9: aircraft
- 10: cabin
- 11: tunnel
- 12: canopy
- 121: side wall of canopy
- 122: top wall of canopy
- 13: protective housing

## Claims

1. Passenger boarding bridge (1), comprising
a tunnel (11),
a cabin (10) located at a front end of the passenger boarding bridge (1) and adapted to face in a docked situation the fuselage of an aircraft (9) to be docked,
the cabin (10) comprising a flexible canopy (12) which can be transferred between an extended state and a retracted state,
**characterized in**
**that** the passenger boarding bridge (1) comprises a wind protection (13), the wind protection (13) is adapted to reduce risk of damages to the canopy caused by stormy wind conditions.

2. Passenger boarding bridge (1) according to the preceding claim, **characterized in**
**that** the wind protection comprises a protective housing (13),
the protective housing (13) is arranged in a manner
- so as to be located at a distance from a canopy side wall (121) and/or a canopy top wall (122) during normal weather condition,
- so as to be in contact at least temporary with the canopy side wall (121) and/or the canopy top wall (122) during stormy weather condition.

3. Passenger boarding bridge (1) according to claim 2,
**characterized in**
**that** the protective housing constitutes a mechanical barrier, adapted to prevent an excessive buckling of the canopy.

4. Passenger boarding bridge (1) according to claim 2,
**characterized in**
**that** the protective housing constitutes a mechanical barrier, adapted to prevent an excessive buckling of the side wall and/or of the top wall.

5. Passenger boarding bridge (1) according to claim 2,
**characterized in**
**that** the protective housing is adapted to reduce risk of damages to the canopy caused by stormy wind conditions at least when the canopy is in the retracted state.
